# DEMANDE DE BREVET EUROPEEN

(11) **EP 0 604 257 A1**
(43) Date de publication de la demande: **29.06.1994**
(21) Numéro de dépôt: 93402941.4
(22) Date de dépôt: 06.12.1993
(51) Int. Cl.: G01F 11/38

(54) **Dispositif de dosage multi-produit**

(30) Priorité: 21.12.1992 FR 9215320
(71) Demandeur: ERCA, F-91942 Les Ulis (FR)
(72) Inventeur: Flahaut, Patrick, F-27000 Franqueville (FR)
(74) Mandataire: Dronne, Guy

(57) **Abrégé**

L'invention concerne un dispositif pour doser des produits liquides et des produits relativement visqueux.

Le dispositif comprend une chambre de dosage (12) fermée par une plaque (14) munie d'une buse (16) de grand diamètre pour le dosage des produits visqueux et une pluralité de buses (18) de diamètre réduit pour le dosage des produits liquides. Un premier obturateur (20) solidaire de la tige de commande (22) coopère avec la buse (16) tandis que des obturateurs (24) reliés mécaniquement (26) à une tige creuse de commande (28) coopèrent simultanément avec les buses (18). Selon la nature du produit à doser on obture la buse initiale (16) ou les buses périphériques (18).

## Description

La présente invention a pour objet un dispositif de dosage multi-produit.

De façon plus précise, l'invention concerne un dispositif qui permet de doser aussi bien des produits liquides que des produits relativement visqueux.

De façon connue, le dosage de tels produits consiste à les faire passer dans une buse ou dans plusieurs buses montées en parallèle qui sont commandées par un obturateur afin d'obtenir le passage de la quantité de produit voulue. Pour obtenir ce dosage, il est nécessaire d'adapter le diamètre de la buse à travers laquelle on fait passer ce produit à la viscosité de celui-ci. Typiquement, dans le cas de produits très fluides, on peut utiliser des buses présentant un diamètre très réduit, de l'ordre de quelques millimètres. En revanche, lorsqu'on veut réaliser le dosage de produits plus visqueux, il est nécessaire d'utiliser une buse présentant un diamètre plus important, par exemple de l'ordre de 12 à 15 mm.

Lorsqu'avec une même installation on veut effectuer successivement le dosage de produits liquides et de produits visqueux, il est nécessaire entre les deux opérations de procéder au démontage de la tête de dosage pour adapter la buse au produit à doser, de calibrer le dispositif de dosage après ce changement de tête et de procéder à des opérations de nettoyage correspondant.

On comprend que ces opérations de montage, de démontage et de re-calibrage des moyens de contrôle du dosage entraînent une perte de temps importante entre deux phases d'utilisation correspondant aux produits de viscosités différentes.

Un objet de la présente invention est de fournir un dispositif de dosage qui peut être utilisé aussi bien pour le dosage de produits très fluides que pour celui de produits visqueux sans nécessiter de démontage de la machine.

Pour atteindre ce but, le dispositif de dosage pour des produits liquides et des produits visqueux se caractérise en ce qu'il comprend :
- une chambre unique apte à recevoir le produit à doser ;
- une plaque de dosage comprenant une pluralité de premiers orifices présentant un premier diamètre adapté au dosage de produits liquides et au moins un deuxième orifice présentant un deuxième diamètre supérieur au premier diamètre et adapté au dosage de produits visqueux, lesdits premiers et deuxième orifices débouchant dans ladite chambre ;
- un premier ensemble mobile apte à obturer simultanément lesdits premiers orifices et un deuxième ensemble mobile apte à obturer ledit deuxième orifice ; et
- des premiers moyens de commande pour déplacer les premiers moyens d'obturation entre une position d'obturation desdits premiers orifices et une deuxième position dans laquelle les premiers orifices sont ouverts et des deuxièmes moyens de commande pour déplacer les deuxièmes moyens d'obturation entre une première position d'obturation dudit deuxième orifice et une deuxième position dans laquelle ledit deuxième orifice est ouvert, lesdits premier et deuxième moyens d'obturation étant indépendants l'un de l'autre.

On comprend qu'ainsi il est possible à l'aide d'un dispositif de dosage et d'une même plaque à orifices formant buse de doser à la fois des produits liquides ou visqueux en sélectionnant la position des deux moyens obturateurs en fonction du produit à doser.

Selon un mode préféré de mise en oeuvre, la plaque de dosage comporte un unique deuxième orifice disposé selon l'axe de la chambre et n premiers orifices disposés sensiblement sur un même cercle dont le centre appartient audit axe, ledit deuxième ensemble mobile comprenant un deuxième organe obturateur apte à coopérer avec ledit deuxième orifice et solidaire d'une première extrémité d'une deuxième tige mobile selon l'axe de ladite chambre, ledit premier ensemble mobile comprenant n premiers organes d'obturation solidaires d'une première extrémité d'une tige de commande creuse coaxiale à ladite deuxième tige de commande.

De préférence, les premiers et deuxièmes moyens de commande comprennent un premier et un deuxième piston solidaires de la deuxième extrémité respectivement desdites première et deuxième tiges et des moyens par pression pour commander le déplacement indépendant desdits pistons.

Selon encore un mode préféré de réalisation, le piston solidaire de ladite deuxième tige est montée dans une chambre définie par la deuxième extrémité de ladite première tige creuse.

Grâce aux dispositions définies ci-dessus, on obtient ainsi un dispositif très compact puisque les deux tiges de commande des deux systèmes d'obturateur sont coaxiales et que, de plus, la chambre de commande de la deuxième tige est disposée à l'intérieur de la première tige creuse de commande des premiers moyens d'obturation.

D'autres caractéristiques et avantages de la présente invention apparaîtront mieux à la lecture de la description qui suit d'un mode préféré de réalisation de l'invention donné à titre d'exemple non limitatif. La description se réfère aux figures annexées sur lesquelles :
- la figure 1 est une vue en coupe longitudinale du dispositif de dosage ;
- la figure 2 est une vue de côté selon la flèche F de la figure 1 du dispositif de dosage ; et
- la figure 3 est une vue en coupe selon la ligne III-III de la figure 1.

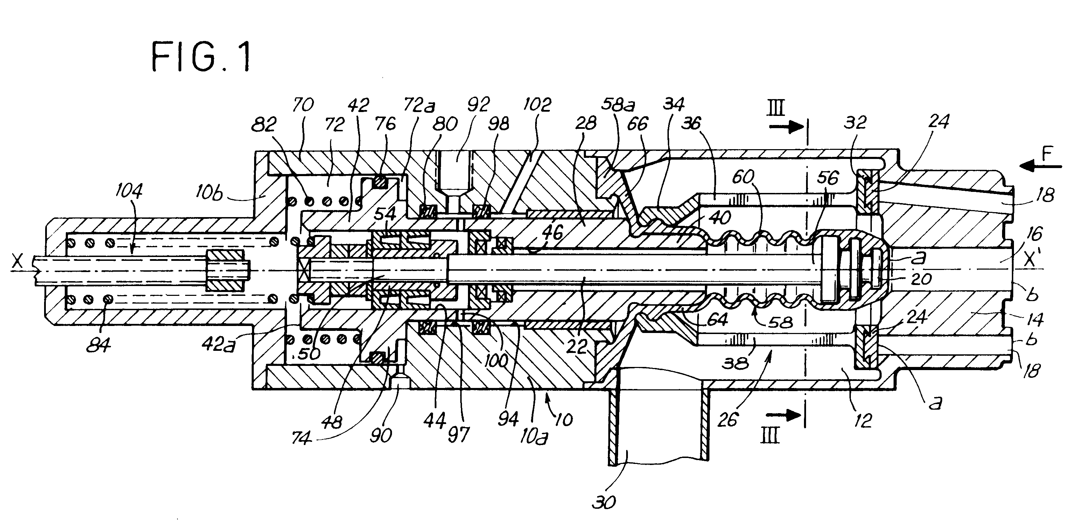

En se référant tout d'abord à la figure 1, on va décrire le principe du dispositif de dosage selon l'invention. Le dispositif comprend un corps 10 présentant un axe longitudinal XX'. Le corps 10 définit une chambre interne 12 de dosage dont une extrémité est fermée par une plaque de dosage 14 dans laquelle sont percées, d'une part, une buse axiale 16 de grand diamètre pour le dosage de produits visqueux et, d'autre part, une pluralité d'orifices 18 de diamètre réduit pour le dosage de produits liquides. Chaque buse comporte une extrémité a qui débouche dans la chambre 12 et une extrémité b de sortie de la buse.

A l'intérieur de la chambre 12 est monté mobile un premier obturateur 20 commandé par une tige axiale 22. La tige 22 commandée par des moyens qui seront décrits ultérieurement et qui permettent de déplacer l'obturateur 20 entre une position fermée dans laquelle il obture la buse 16 et une position d'ouverture qui permet le passage du produit contenu dans la chambre 12 à travers la buse 16 et donc son dosage. On trouve également une pluralité d'organes d'obturation 24 qui peuvent être déplacés par l'intermédiaire d'un porte-obturateur 26 et d'une tige de commande creuse 28 coaxiale à la tige 22 et entourant celle-ci sur une partie de sa longueur. La tige 28 est associée à des deuxièmes moyens de commande qui permettent de déplacer les organes obturateurs 24 pour les amener soit dans une position d'obturation des buses 18, soit dans une position d'ouverture. En outre, la commande des déplacements de l'obturateur 20 et des obturateurs 24 est indépendante. Le produit à doser est introduit dans la chambre 12 par une ou plusieurs conduites d'alimentation 30. Selon la nature du produit à doser, on commande l'ouverture et la fermeture de l'obturateur 20 ou des obturateurs 24, le groupe d'obturateurs non commandés étant bien sûr maintenu fermé.

On comprend qu'avec cette disposition, le même dispositif de dosage permet de doser des produits fluides à l'aide des buses 18, l'obturateur 20 étant maintenu en permanence dans sa position fermée, ou des produits relativement visqueux à l'aide de la buse 16, les obturateurs 24 étant maintenus en position fermée.

En se référant maintenant à l'ensemble des figures, on va décrire plus en détails un mode préféré de réalisation du dispositif de dosage.

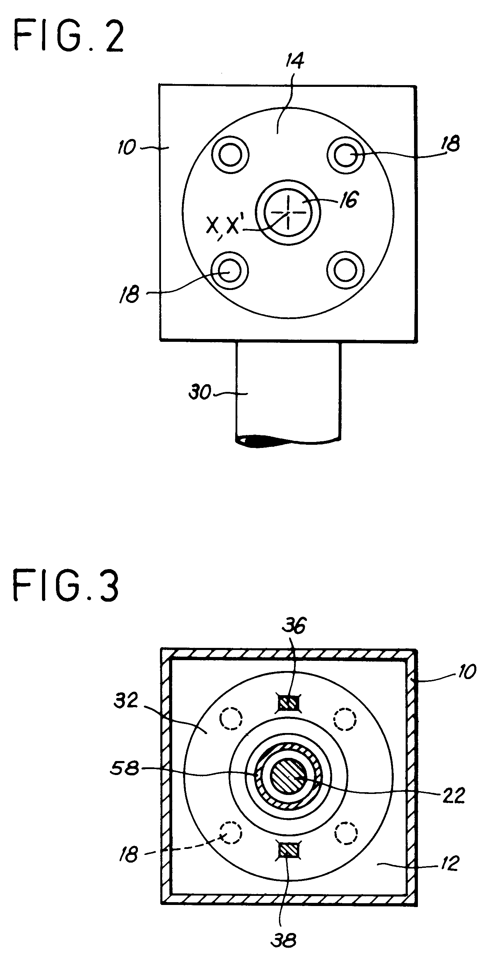

Comme le montre les figures 2 et 3, les extrémités internes a des buses 18 sont disposées sur un même cercle dont le centre appartient à l'axe XX' du dispositif de dosage. Les obturateurs 24 sont montés sur une couronne 32. Cette couronne 32 est reliée à une pièce annulaire 34 par au moins deux bras 36 et 38. Cet ensemble forme le porte-obturateur 26. La pièce annulaire 34 est solidaire de l'extrémité 40 de la tige creuse 28. L'autre extrémité 42 de la tige creuse 28 comporte un alésage 44 de diamètre plus important que l'alésage courant 46 de la tige creuse. L'alésage 44 constitue une chambre de commande pour un piston de commande 48 solidaire de la deuxième extrémité 50 de la tige axiale 22. Le piston 48 est monté coulissant de façon étanche dans l'alésage 44 grâce à la présence de joints annulaires d'étanchéité tels que 54. L'autre extrémité 56 de la tige est munie, comme on l'a déjà expliqué, d'un obturateur axial 20 pour la buse centrale de grand diamètre 16.

Pour assurer une bonne étanchéité vis-à-vis des produits introduits dans la chambre 12, un soufflet déformable 58 est, d'une part, solidaire de la périphérie de l'obturateur 20 et, d'autre part, par son bord 58a ancré dans un alésage de la partie 10a du corps du dispositif de dosage. Plus précisément, la partie courante 60 du soufflet déformable entoure l'extrémité de la tige 22, sa partie 64 entoure l'extrémité 40 de la tige creuse 28 et un prolongement de forme annulaire 66 raccorde la partie 64 du soufflet au bord d'ancrage 58a de celui-ci. La liaison mécanique entre la pièce annulaire 34 et l'extrémité 40 de la tige creuse est réalisée de part et d'autre du soufflet déformable 58 par la coopération, par exemple, d'un bossage de l'extrémité de la tige avec un alésage interne de la pièce annulaire 34.

Le corps 10 forme à son extrémité opposée à celle où se trouve la plaque à buse 14 qui est référencé 70 définit une chambre de commande 72 pour un deuxième piston 74 solidaire de l'extrémité 42 de la tige creuse. La partie avant 72a de la chambre 72 est rendue étanche, d'une part, grâce à un joint annulaire d'étanchéité 76 monté sur le piston 74 et, d'autre part, grâce à un joint d'étanchéité 80 solidaire du corps 10 et coopérant avec la face externe de la tige creuse 28.

Des ressorts de rappel, respectivement référencés 82 et 84, coopèrent avec respectivement les pistons 48 et 74 pour maintenir au repos les obturateurs 20 et 24 dans leur position fermée, c'est-à-dire celle dans laquelle ils sont appliqués sur les extrémités a des buses 18 et 16.

De préférence, la commande des tiges 22 et 28 est pneumatique ou hydraulique. La commande des déplacements de la tige creuse 28 est obtenue en appliquant le fluide de commande à l'entrée de l'orifice 90 ménagé dans le corps 10 du dispositif de dosage et qui débouche dans la chambre de commande 72a. L'application du fluide sous pression provoque le recul de la tige creuse 28 par l'intermédiaire du piston 74 qui comprime le ressort 82. La course est limitée par la venue en butée de la face terminale 42a de la tige creuse avec la plaque d'extrémité 10b du corps 10.

La commande du piston 48 de la tige axiale 22 est réalisée de la manière suivante : un perçage 92 ménagé dans le corps 10 débouche dans l'alésage axial 94 du corps 10 dans lequel se déplace la tige creuse 28. Plus précisément, le perçage 92 débouche dans l'alésage axial 94 dans une zone annulaire 97 limitée par deux joints d'étanchéité toriques 80 et 98. Le fluide est effectivement appliqué dans la chambre de commande du piston 48 par un orifice ou plusieurs orifices radiaux 100 qui traversent la tige creuse 28 et mettent en communication l'espace annulaire 97 limité par les joints 80 et 98 avec l'intérieur de la chambre de commande 44 du piston 48. La longueur de l'espace annulaire 97 entre les joints 80 et 98 est suffisante pour que, quelle que soit la position de la tige creuse 28, les orifices radiaux 100 soient toujours en regard de l'espace annulaire 97 entre les joints 80 et 98.

Il faut noter également que le soufflet d'étanchéité 58 est réalisé dans ses différentes parties 60, 64, 66 de telle manière qu'il ne soit soumis à aucune contrainte excessive, quelle que soit la position relative des tiges 22 et 28. Il faut souligner également qu'un alésage 102 ménagé dans le corps du dispositif et débouchant dans l'alésage axial 94 assure la mise à la pression atmosphérique des systèmes de commande par pression en cas de fuite des circuits de commande pneumatiques.

Enfin le système par vis 104 permet de régler la course maximale de la tige 22 commandant l'ouverture de la buse 16.

Il va de soi que la commande des deux tiges coaxiales 22 et 28 pourraient être réalisées de manière différente, par exemple à l'aide d'électroaimants et de noyaux plongeurs sans que l'on sorte de l'invention. De même, le dispositif de dosage pourrait comporter plusieurs buses pour le dosage de produits liquides peu visqueux. Dans ce cas, la tige 22 serait associée à plusieurs obturateurs mécaniquement solidaires entre eux.

## Revendications

1. Dispositif de dosage pour des produits liquides et des produits visqueux, caractérisé en ce qu'il comprend :
- une chambre unique (12) apte à recevoir le produit à doser ;
- une plaque de dosage (14) comprenant une pluralité de premiers orifices (18) présentant un premier diamètre adapté au dosage de produits liquides et au moins un deuxième orifice (16) présentant un deuxième diamètre supérieur au premier diamètre et adapté au dosage de produits visqueux, lesdits premier et deuxième orifices débouchant dans ladite chambre ;
- un premier ensemble mobile (24, 26, 28) apte à obturer simultanément lesdits premiers orifices (18) et un deuxième ensemble mobile (20, 22) apte à obturer ledit deuxième orifice (16) ; et
- des premiers moyens de commande (74, 82) pour déplacer les premiers moyens d'obturation entre une position d'obturation desdits premiers orifices et une deuxième position dans laquelle les premiers orifices sont ouverts et des deuxièmes moyens de commande (48, 84) pour déplacer les deuxièmes moyens d'obturation entre une première position d'obturation dudit deuxième orifice et une deuxième position dans laquelle ledit deuxième orifice est ouvert, lesdits premier et deuxième moyens d'obturation étant indépendants l'un de l'autre.

2. Dispositif selon la revendication 1, caractérisé en ce que ladite plaque de dosage comprend un unique deuxième orifice (16) disposé selon l'axe de la chambre et une pluralité de premiers orifices (18) disposés sensiblement sur un même cercle admettant comme centre ledit deuxième orifice, en ce que ledit deuxième ensemble mobile comprend une tige (22) mobile en translation selon une direction XX' orthogonale à la plaque de dosage (14), dont une première extrémité (56) est solidaire d'un deuxième obturateur (20) et en ce que ledit premier ensemble mobile comprend une tige creuse (28) coaxiale à la tige (22) du premier ensemble et montée coulissante autour de celle-ci, et un ensemble porte-oburateur (26) solidarisant en translation une extrémité (40) de ladite tige creuse (28) avec une pluralité de premiers obturateurs (24) aptes à coopérer avec lesdits premiers orifices (18).

3. Dispositif selon l'une quelconque des revendications 1 à 2, caractérisé en ce qu'il comprend en outre un soufflet d'étanchéité (58) disposé dans ladite chambre de dosage (12) dont une extrémité est solidaire dudit deuxième obturateur (20) et dont l'autre extrémité est solidaire du corps (10) dudit dispositif de dosage.

4. Dispositif selon la revendication 2, caractérisé en ce que lesdits deuxièmes moyens de commande comprennent un deuxième piston (74) monté coulissant dans une chambre de commande (72, 72a) ménagée dans un corps (10) du dispositif et en ce que lesdits premiers moyens de commande comprennent un premier piston (48) solidaire de la deuxième extrémité de la tige (22) du premier ensemble mobile, ledit deuxième piston étant monté mobile en translation dans une deuxième chambre de commande (44) ménagée dans la deuxième extrémité de ladite tige creuse de commande (28).

5. Dispositif selon l'une quelconque des revendications 2 et 4, caractérisé en ce que ledit ensemble porte-obturateur (26) comprend une pièce annulaire (34) solidaire de la première extrémité (40) de la tige creuse, une pièce en forme de couronne (32) sur laquelle sont fixés lesdits premiers obturateurs (24) et des bras (36, 38) sensiblement parallèles à ladite direction axiale (XX') reliant ladite pièce annulaire (34) à ladite pièce en forme de couronne (32).

6. Dispositif selon la revendication 4, caractérisé en ce que lesdits premier (48) et deuxième (74) pistons sont commandés par un fluide sous pression.

7. Dispositif selon la revendication 6, caractérisé en ce qu'il comprend en outre des moyens élastiques de rappel (82, 84) tendant à maintenir lesdits premiers et deuxième obturateurs dans leur position où ils ferment lesdits premiers (18) et deuxième (16) orifices.
